# EUROPÄISCHE PATENTSCHRIFT

(11) **EP 1 617 238 B1**
(45) Veröffentlichungstag und Bekanntmachung des Hinweises auf die Patenterteilung: **03.07.2013**
(21) Anmeldenummer: 05103478.3
(22) Anmeldetag: 28.04.2005
(51) Int. Cl.: G01V 3/10, G01V 3/15

(54) **Metallsuchgerät mit schmalen Sondengehäuse**
Metal detector with narrow probe housing
Détecteur de métaux à boitier pour sonde de faible largeur

(30) Priorität: 09.07.2004 DE 202004010782 U; 30.07.2004 DE 202004011921 U
(43) Veröffentlichungstag der Anmeldung: 18.01.2006
(73) Patentinhaber: FIRMA ING. KLAUS EBINGER, D-51149 Köln (DE)
(72) Erfinder: Ebinger, Klaus, 51143 Köln (DE)
(74) Vertreter: Heim, Hans-Karl

(56) Entgegenhaltungen:
- EP-A- 0 790 507
- EP-A- 0 957 377
- DE-U1- 8 532 245
- DE-U1- 9 213 051
- US-A- 1 910 820

## Beschreibung

Die Erfindung betrifft einen Detektor, insbesondere ein Metallsuchgerät, mit einem schmalen Sondengehäuse und mindestens einer Sende- und mindestens einer Empfangsspule.

Ein derartiger Detektor ist z.B. aus EP 0 607 605 B1 bekannt. Detektoren dieser Art weisen vorzugsweise ring- oder tellerartige Suchsonden auf. Die meisten dieser Sonden besitzen eine relativ große Grundfläche, um eine optimale Positionierung der Sende- bzw. der Empfangsspulen zu gewährleisten. Durch die großen Flächen dieser Sonden sind sie gut geeignet, aufspürbare Materialien in einem ebenen, weiten Gelände sicher zu detektieren. Sollen aber unebene Gelände, eventuell mit Hindernissen, überprüft werden, wie beispielsweise im Wald, so treten bei den beschriebenen Sonden Probleme auf.

Zum einen können sie, bedingt durch ihre große Oberfläche, nicht nahe an Hindernissen verwendet werden, da sich ihre Detektionsergebnisse hauptsächlich auf den Bereich senkrecht unter dem Detektormittelpunkt beziehen.

Zum anderen tritt ein weiteres Problem auf, wenn in Mulden oder Erdfurchen detektiert wird. Da die bekannten Detektorsonden meist eine relativ große Grundfläche aufweisen, können sie in Vertiefungen von Furchen oder Mulden nicht direkt angewendet werden. Meist müssen sie über diese Mulden oder Furchen gehalten werden. Dadurch entstehen unterschiedliche Abstände zwischen der Sondenunterseite und dem Untergrund. Eine Interpretation und Auswertung der empfangenen Signale ist deshalb schwierig.

Neben den Problemen der Detektion bei dieser Art von Detektorsonden liegt auch ein Nachteil in der Handhabung. Durch die großen, flächigen Sonden ist es mit Detektoren dieser Art schwer möglich, Gegenstände im Unterholz oder ähnlichem Gelände aufzufinden, da die Handhabung dieser Sonden, z.B. im Unterholz, schwierig ist.

Auch zylinderförmig ausgebildete Detektorsonden sind bekannt. Eine weitere bereits schlank ausgebildete Detektorsonde ist als Hockey-Sonde in der Art eines Hockey-Schlägers bekannt.

Aus der US 1 910 820 A ist ein Metaldetektor bekannt, der ein quaderförmiges Gehäuse aufweist. In dem quaderförmigen Gehäuse ist eine Such- und eine Empfangsspule fest angeordnet. Hierbei sind die Spulen senkrecht zueinander angeordnet um auf die Verkopplung der beiden Spulen zueinander Einfluss zu nehmen.

Alle bisher bekannten Detektorsonden dieser Bauart waren schwer, klobig sowie schwierig und aufwändig zu produzieren und damit teuer in der Herstellung.

Der Erfindung liegt die **Aufgabe** zugrunde, einen Detektor der eingangs genannten Art so weiterzubilden, dass er die vorausgehend genannten Nachteile überwindet.

Diese Aufgabe wird erfindungsgemäß bei einem Detektor der eingangs genannten Art durch die im Anspruch 1 angegebenen Merkmale gelöst.

Vorteilhafte Ausgestaltungen sind in den abhängigen Ansprüchen angegeben.

Der erfindungsgemäße Detektor wird vorzugsweise als TR-Wirbelstromsonde (Transmitter-Receiver-Sonde) betrieben. Dies bedeutet, dass elektromagnetische Wellen als Primärstrahlung von einer Sendespule abgestrahlt werden und die vom Untergrund reflektierten Anteile dieser elektromagnetischen Wellen als Sekundärstrahlung von einer Empfängerspule empfangen werden. Die empfangene Sekundärstrahlung lässt dann nach Auswertung eine Aussage darüber zu, ob im Boden oder im Wasser zu detektierende Objekte vorhanden sind.

Eine bessere Handhabung und bessere Detektionseigenschaften des Detektors, insbesondere im schwierigen Gelände, wird dadurch erreicht, dass von der bekannten Teller- oder Ringform eines Detektors abgegangen wird und eine längliche, schmale Form gewählt wird. Somit ist schwieriges Gelände, wie beispielsweise um Bäume herum oder an Baumwurzeln, für den Detektor leichter zugänglich.

Da das Volumen der Sonde kleiner ist als bei bekannten Sonden, ist die geeignete Platzierung der Sende- und Empfangsspule um einiges schwieriger. Dies wird in dem erfindungsgemäßen Detektor dadurch gelöst, dass eine Spule so platziert ist, dass ihre Spulenachse in Längsrichtung des Gehäuses angeordnet ist und die andere Spule so platziert ist, dass ihre Spulenachse senkrecht zur Längsrichtung angeordnet ist.

Durch diese Platzierung der Spulen wird ein orthogonal entkoppeltes Spulensystem nach der 90°-Methode geschaffen. Diese Entkopplung ist vorteilhaft, damit die von der Sendespule ausgesandten elektromagnetischen Primärimpulse nicht schon beim Aussenden Ströme in den Empfangsspulen induzieren, sondern im Wesentlichen nur die aus dem Boden zurückgestrahlten elektromagnetischen Sekundärimpulse.

Um unterschiedliche Detektionseigenschaften mit einem Detektorgehäuse ermöglichen zu können, ohne komplizierte Elektronik einsetzen zu müssen, kann der Abstand zwischen der Sende- und der Empfangsspule variiert werden. Dieser Abstand der beiden Spulen wird als Basisabstand bezeichnet. Je enger dieser Basisabstand gewählt wird, umso empfindlicher reagiert der Detektor auf Kleinteile. Wird der Basisabstand vergrößert, so können bevorzugt große, tief liegende Objekte detektiert werden.

Beide Spulen sind sowohl als Sende- wie auch als Empfangsspule geeignet und schaltbar. Es hat sich aber als vorteilhaft herausgestellt, die quer zur Längsrichtung angeordnete Spule als Sendespule zu nutzen, da die andere Spule, die in Längsrichtung orientiert ist, durch das größere Platzangebot im Detektorgehäuse größer und somit empfindlicher ausgelegt werden kann.

Um für die Detektion geeignete elektromagnetische Felder generieren zu können, ist es zweckmäßig, die im Detektor verwendeten Spulen zylinderförmig auszubilden. Besonders geeignete elektromagnetische Felder werden durch in die Spule eingesetzte Ferritkerne erzeugt. Dasselbe Prinzip einer zylindrischen Spule mit eingesetztem Ferritkern wird auch bei der Empfangsspule genutzt.

Um eine ungewollte elektrostatische Aufladung der beiden Spulen, welche zu falschen oder verfälschten Detektionsergebnissen führen kann, zu unterbinden, sind die Spulen zweckmäßigerweise durch ein Kohlefaser-Kunststoffrohr (CFK-Rohr) geschirmt. Diese leitenden Kohlefaser-Kunststoffrohre sind auf Massepotenzial gelegt, um eine elektrostatische Aufladung der Spulen zu verhindern.

Bei einem orthogonal entkoppelten Spulensystem nach der 90°-Methode sind kleinste mechanische Dejustierungen zwischen den Spulen zu verhindern, damit sich die unterschiedlichen Spulen bei der Detektion nicht gegenseitig beeinflussen können. Eine solche Beeinflussung könnte durch eine ungewollte Änderung der Position der beiden Spulen zueinander entstehen. Um dies zu verhindern, werden die in die Kohlefaser-Kunststoffrohre eingeschlossenen Spulen sowie auch alle anderen Bauteile von unten in das Gehäuse eingesetzt und entsprechend der gewünschten Position justiert. Zur einfacheren Montage sind Gießmulden für die sich in den Kohlefaser-Kunststoffrohren befindlichen Spulen im Gehäuse vorgesehen, so dass die Spulen leichter ausgerichtet werden können. Zur endgültigen Fixierung der Kohlefaser-Kunststoffrohre und der eingeschlossenen Spulen werden diese mit einer Vergussmasse vergossen. Hierbei wird darauf geachtet, dass die Vergussmasse das Detektorgehäuse bodenseitig flächenbündig abschließt.

Um einen möglichst leichten und damit auch leicht handhabbaren Detektor zu erhalten, können bevorzugt noch elektrisch und/oder magnetisch neutrale Mittel zur Gewichtsreduzierung der Vergussmasse und damit zur Reduzierung des Gesamtgewichts des entstehenden Detektors, beigefügt werden. Diese Mittel können z.B. "Microballons" sein, welche in der Flugtechnik angewendet werden. Diese mikroskopisch kleinen Glashohlkugeln verringern das Gewicht der Vergussmasse. Eine andere Methode, um das Gesamtgewicht des Detektors zu reduzieren, besteht darin, vor dem Vergießen die übrigen Hohlräume mit Schaumstoff-Einlegeteilen zu verfüllen. Anschließend werden diese Schaumstoff-Einlegeteile beim Vergießen des gesamten Gehäuses mit der Vergussmasse übergossen. Da die Spulen nicht den gesamten Hohlraum des Gehäuses ausfüllen, ist es möglich, weitere im Detektionsprozess benötigte Elektronik im Gehäuse zu platzieren und diese mit den restlichen im Gehäuse angebrachten Elementen zu vergießen.

Die Kabelzuführung für den Detektor befindet sich vorteilhafterweise an einer geschützten Stelle an der Detektoroberseite. Die Kabelzuführung besitzt eine Dichtkabelverschraubung, um mögliche Umwelteinflüsse auf die sich im Detektorgehäuse befindlichen Bauteile zu verhindern. Solche ungewollten Umwelteinflüsse können beispielsweise eindringende Feuchtigkeit oder andere Flüssigkeiten, wie beispielsweise Säuren sein. Die Kabelzuführung wird auch durch die Gelenkverbindung des Endstückes der Tragestange und des Detektors geschützt. Somit wird die Zuleitung widerstandsfähig gegen Kabelbrüche. Durch diese Gestaltung der Detektoroberfläche ist eine gute Haltbarkeit und hohe Unempfindlichkeit des Detektors bezüglich äußerer Einflüsse gegeben.

Geschützt durch die Dichtkabelverschraubung der Kabelzuführung befindet sich der Anschlusstopf des Detektors. Dieser Anschlusstopf enthält die notwendigen Kontaktstifte für die Kabelzuführung und weitere Einstellelemente, welche für den Sondenabgleich benötigt werden.

Durch die längliche, schmale Form des Detektors ist es möglich, die Detektion an Hindernissen, wie beispielsweise einer Hauswand oder nahe an Baumwurzeln durchzuführen. Die schmale Form ermöglicht es auch Mulden, Erdfurchen oder Grabungslöcher relativ einfach nach zu detektierenden Elementen zu durchsuchen. Die Stirnseiten des Detektorgehäuses sind von vorteilhafter Gestaltung, beispielsweise abgerundet, wodurch die Anwendung des Detektors im hohen Gras und Unterholz erleichtert wird. Es sind auch andere Ausführungen der Stirnseiten denkbar, wie beispielsweise ein spitzer oder gerader Abschluss.

Aufgrund der einfachen Außenform des Detektorgehäuses und der Möglichkeit, Bauelemente wie beispielsweise Spulen von unten in dieses Gehäuse einzufügen, kann das gesamte Gehäuse einteilig ausgebildet sein. Die Herstellungskosten können hierdurch erheblich reduziert werden. Es ist dankbar, das Sondengehäuse im Spritzgussverfahren herzustellen. Zur weiteren Minimierung des Gesamtgewichts des Detektors besitzt das Detektorgehäuse doppelte Wände. Diese bieten den Vorteil, dass nach dem Einsetzen der Spulen und weiterer Bauelemente nur der Bereich zwischen den jeweiligen Innenwänden vergossen werden muss. Der Bereich zwischen einer Innen- und der dazugehörigen Außenwand kann also unvergossen bleiben, und dient somit zusätzlich zur Gewichtsreduzierung des Detektors im Gegensatz zu einem vollkommenen Verguss des Gehäuses.

Insbesondere hinsichtlich der zur Entkopplung der beiden Spulen genutzten 90°-Methode ist eine hohe Steifigkeit und Stabilität des Detektors notwendig. Hierzu sind zusätzlich zur Fixierung der Spulen durch den Verguss Versteifungsrippen im Gehäuse vorgesehen. Durch diese im Gehäuse quer zur Längsrichtung verlaufenden Rippen erhält das Detektorgehäuse eine höhere Verwindungsstabilität. Zur Verbesserung dieser Stabilität besitzt das Detektorgehäuse auf seiner Oberfläche zur Halterung des Endstückes der Tragestange hin, von vorne ansteigende äußere Versteifungsrippen. Durch diese sich im und auf dem Gehäuse befindlichen Rippen entsteht eine verwindungssteife Sondenkonstruktion. Die äußeren Rippen dienen zusammen mit dem gelenkigen Endstück außerdem zum Schutz der Anschlusseinrichtung und der Kabelzuführung gegenüber äußeren Einwirkungen.

Möchte man einen erfindungsgemäßen Detektor unter Wasser einsetzen, so kann es von Vorteil sein, die längliche Grundform des Detektors beizubehalten, aber dem gesamten Gehäuse eine noch stromlinienförmigere Form zu geben.

Die Erfindung wird nachfolgend beispielhaft anhand schematischer Zeichnungen näher erläutert. Es zeigen:
- Fig. 1: eine perspektivische Ansicht auf den Detektor von vorne, mit schräg aufragendem Endstück für die Tragestange;
- Fig. 2: einen Längsschnitt durch den Detektor, mit schräg aufragendem Endstück;
- Fig. 3: eine Ansicht auf das Detektorgehäuse von unten ohne eingefüllte Vergussmasse, mit angedeuteter Lage zweier Spulen;
- Fig. 4: eine perspektivische Ansicht auf den Detektor nach Fig. 1 von vorne ohne Endstück für die Tragestange; und
- Fig. 5: eine perspektivische Ansicht auf den Detektor von vorne nach Fig. 4 mit angebrachter Anschlussvorrichtung.

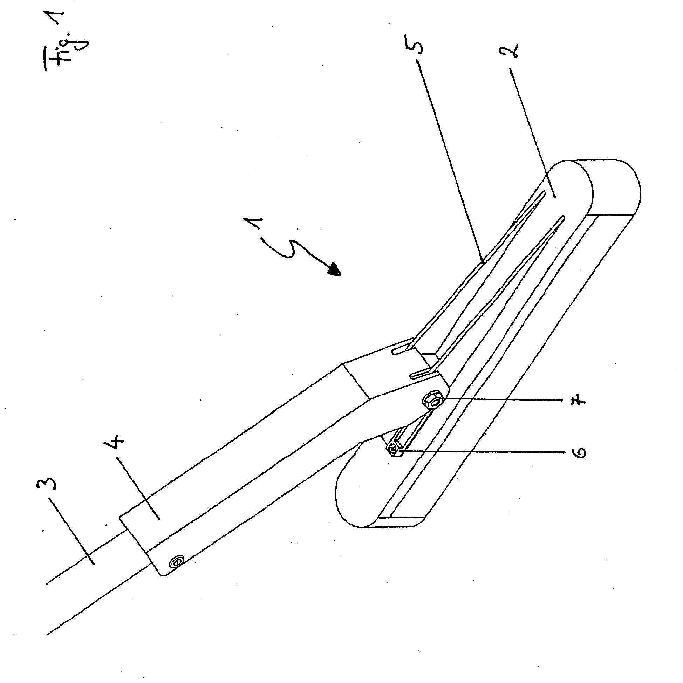

Der in Fig. 1 dargestellte Detektor 1 zeigt ein lang gestrecktes, in der Kontur ovalförmiges Gehäuse 2, das sowohl an den Seiten wie auch an der Oberfläche komplett geschlossen ist. Zur Versteifung des Gehäuses 2 und der Halterung 7 für das Endstück 4 sind im vorderen Bereich des Gehäuses zwei Versteifungsrippen 5 vorgesehen, welche vom vorderen Bereich hin zur Halterung 7 keilförmig ansteigen.

Das Gehäuse 2 ist am vorderen und rückwärtigen Ende teilkreisförmig abgerundet. Die Außenflächen der beiden Längsseiten verlaufen parallel zueinander. Durch die Halterung 7 und das Endstück 4 wird, wie in dieser Figur verdeutlicht, eine Schutzeinrichtung für eine Anschlusseinrichtung gebildet. Eine Tragestange 3 ist am Endstück 4 mittels einer Klemm- bzw.

Schraubverbindung befestigt. Die Befestigung des Endstückes 4 an der Halterung 7 ist gelenkig über eine Schraubverbindung realisiert.

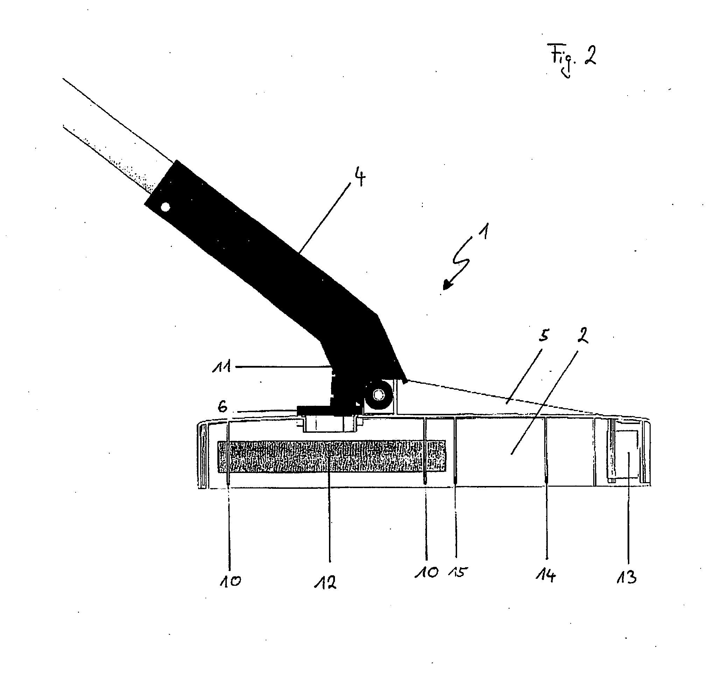

In Fig. 2 ist der Detektor 1 in einem Längsschnitt dargestellt. Neben von vorne zur Halterung 7 ansteigenden Versteifungsrippen 5 sind auch innere, quer zur Längsrichtung verlaufende Versteifungsrippen 10, 14, 15 dargestellt. An der Anschlusseinrichtung 6 ist eine Dichtkabelverschraubung 11 befestigt.

Zwei im Gehäuse 2 angeordnete Spulen 12, 13 sind nach der 90°-Methode entkoppelt. Dazu ist eine Spule 12 in Längsrichtung des Gehäuses 2, die andere Spule 13 quer zur Längsrichtung vorgesehen. Es ist möglich, die Spule 12, ausgehend von der gezeigten Position, bis zur Versteifungsrippe 14 nach vorne zu verschieben, um die Detektoreigenschaften zu beeinflussen. Hierzu kann die Rippe 15 entfernt werden. Durch die Veränderung des Abstandes der zwei Spulen 12, 13, dem so genannten Basisabstand, können die Sucheigenschaften von sehr empfindlich auf Kleinteile bis auf nur empfindlich auf große Teile abgestimmt werden. Die von der Bodenseite eingebrachte leichte Vergussmasse zur Fixierung der Spulen und Elektronik und der flächenbündige bodenseitige Abschluss ist in Fig. 2 nicht gezeigt.

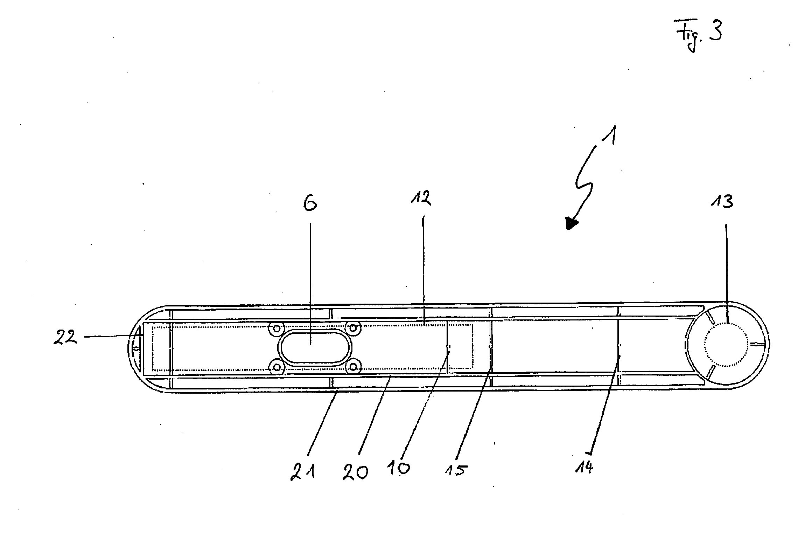

Fig. 3 zeigt eine Ansicht von unten auf das in Fig. 2 dargestellte Detektorgehäuse. Die Lage der Ferritkerne der Spulen ist durch die punktierten Linien angedeutet. Es ist keine Vergussmasse eingefüllt. Es ist zu erkennen, dass die inneren Versteifungsrippen 10 quer zur Längsrichtung des Gehäuses verlaufen.

Zusätzlich zur Außenwand 21 weisen die Längsseiten eine zweite innere Wand 20 auf, die parallel zur jeweiligen Außenwand 21 verläuft. Am hinteren Ende des Detektors ist auch an der Querseite eine innere Wand 22 vorgesehen. Die Spule 12 kann wiederum mit ihrem vorderen Ende bis zur Versteifungsrippe 14 platziert werden, um die Detektionseigenschaften zu beeinflussen.

In den nicht durch die Spule 12 ausgefüllten Bereichen, zwischen den inneren Wänden 20, 22, kann auch benötigte Elektronik eingebracht werden. Beim Vergießen wird nur der innere Bereich mit Vergussmasse gefüllt. Zusätzlich wird noch der Bereich um die Spule 13 ausgefüllt.

Zur Befestigung der Anschlusseinrichtung 6 sind vier Bohrungen vorhanden. In der Darstellung nach Fig. 3 ist auch die ovale, schmale Gesamtform des Gehäuses erkennbar.

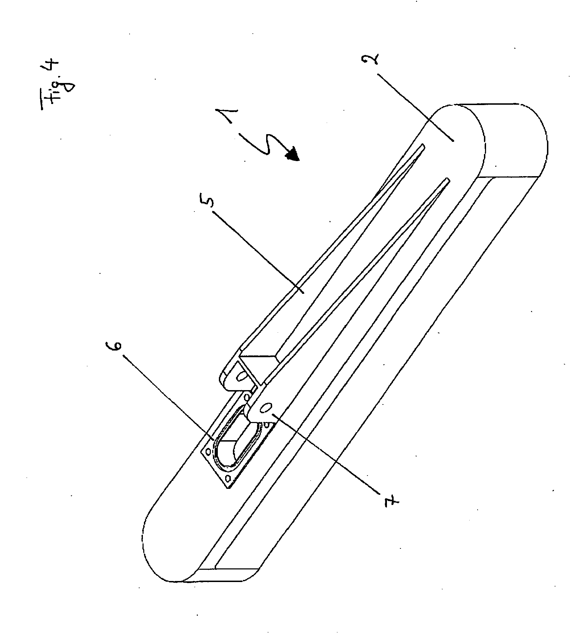

Fig. 4 zeigt das Gehäuse nach Fig. 1 in einer perspektivischen Ansicht, wobei die Tragestange und das Endstück entfernt sind. Hierbei ist die Anschlusseinrichtung 6 mit den zur Befestigung vorgesehenen Bohrungen ersichtlich.

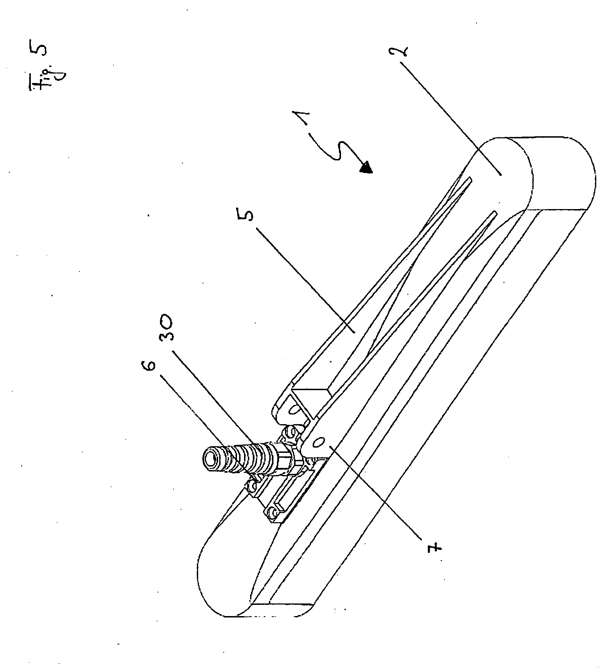

Fig. 5 zeigt eine perspektivische Ansicht des Detektors nach Fig. 4, wobei auf die Anschlusseinrichtung 6 eine Dichtkabelverschraubung 30 angebracht ist. Diese dient neben einer Stabilisierung der Zuführungsleitung auch zur Abdichtung der im Gehäuse befindlichen Elektronik vor Umwelteinflüssen und Feuchtigkeit.

Durch den erfindungsgemäßen Detektor ist es möglich, auch Gegenstände nahe an Hindernissen oder in unwegsamem Gelände zu detektieren. Durch die Bauweise des Detektors ist er sehr leicht und kann dadurch sehr einfach und komfortabel gehandhabt werden.

## Patentansprüche

1. Detektor, insbesondere Metallsuchgerät,
- mit einem länglichen schmal geformten Gehäuse (2),
- mit mindestens einer Sende- (13) und mindestens einer Empfangsspule (12),
- wobei die mindestens eine Sendespule (13) und die mindestens eine Empfangsspule (12) zueinander entkoppelt im Gehäuse (2) angeordnet sind, und
- wobei die Spulenachse einer Spule in Längsrichtung des Gehäuses (2) und die Spulenachse einer anderen Spule etwa senkrecht zur Längsrichtung des Gehäuses (2) angeordnet ist,
**dadurch gekennzeichnet,**
- **dass** die mit ihrer Spulenachse in Längsrichtung orientierte Spule (12) in unterschiedlichen Abständen zu der etwa senkrecht zur Längsrichtung angeordneten Spule (13) im Gehäuse (2) platzierbar ist

2. Detektor nach Anspruch 1,
**dadurch gekennzeichnet,**
**dass** die mit der Spulenachse in Längsrichtung angeordnete Spule (12) länger als die mit der Spulenachse etwa senkrecht zur Längsrichtung angeordnete Spule (13) ist.

3. Detektor nach Anspruch 1 oder 2,
**dadurch gekennzeichnet,**
**dass** die Spulen (12, 13) eine zylindrische Form und einen Ferritkern aufweisen.

4. Detektor nach einem der Ansprüche 1 bis 3,
**dadurch gekennzeichnet,**
**dass** die Spulen (12, 13) eine elektrostatische Schirmung, insbesondere mittels Kohlefaser-Kunststoffrohren, aufweisen.

5. Detektor nach Anspruch 4,
**dadurch gekennzeichnet,**
**dass** die Schirmung mit Spulen (12, 13) und weitere Elek-tronik mit einer Vergussmasse im Gehäuse (2) vergossen ist, und
**dass** der Vergussmasse, die insbesondere Epoxidharz aufweist, elektrisch und/oder magnetisch neutrale Mittel zur Gewichtsreduzierung beigefügt sind.

6. Detektor nach einem der Ansprüche 1 bis 5,
**dadurch gekennzeichnet,**
**dass** an der Oberseite des Gehäuses (2) eine Anschlussvorrichtung (6) für ein Verbindungskabel vorgesehen ist, welches eine Dichtkabelverschraubung (30) aufweist.

7. Detektor nach einem der Ansprüche 1 bis 6,
**dadurch gekennzeichnet,**
**dass** auf der Oberseite des Gehäuses (2) etwa mittig eine Halterung (7) für eine Tragestange (3) des Detektors vorgesehen ist,
**dass** ein Endstück (4) der Tragestange (3) gelenkig an der Halterung (7) angreift, und
**dass** das Endstück (4) und die Halterung (7) eine Schutzeinrichtung für die Anschlusseinrichtung (6) mit Zuführung bilden.

8. Detektor nach einem der Ansprüche 1 bis 7,
**dadurch gekennzeichnet,**
**dass** das Gehäuse (2) etwa die Form einer schmalen, länglichen Schachtel aufweist,
**dass** die Länge des Gehäuses (2) ein Vielfaches der Breite, insbesondere größer als das Vierfache, ist, und
**dass** die Stirnseiten abgerundet, insbesondere teilkreisförmig oder spitz zulaufend oder stumpf ausgebildet sind.

9. Detektor nach einem der Ansprüche 1 bis 8,
**dadurch gekennzeichnet,**
**dass** das Gehäuse (2) einteilig ausgebildet ist,
**dass** auf der Innenseite des Gehäuses Versteifungsrippen (10, 14, 15) vorgesehen sind.

10. Detektor nach einem der Ansprüche 1 bis 9,
**dadurch gekennzeichnet,**
**dass** das Gehäuse (2) zumindest auf den Längsseiten doppelwandig ausgebildet ist, und dass der Raum zischen den Innenwänden (20) vergossen ist.

11. Detektor nach einem der Ansprüche 1 bis 10,
**dadurch gekennzeichnet,**
**dass** die Oberseite des Gehäuses (2) mit Ausnahme der Anschlusseinrichtung (6) geschlossen, und die Unterseite offen ausgebildet ist, und
**dass** auf der Oberseite längliche Versteifungsrippen (5) vorgesehen sind.

12. Detektor nach einem der Ansprüche 5 bis 11,
**dadurch gekennzeichnet,**
**dass** die Vergussmasse das Detektorgehäuse (2) bodenseitig flächenbündig abschließt.

13. Detektor nach einem der Ansprüche 5 bis 12,
**dadurch gekennzeichnet,**
**dass** die Hohlräume um die bodenseitig in das Detektorgehäuse (2) eingebrachten Spulen (12, 13) und die Elektronik mit Schaumstoff-Einlegeteilen verfüllt sind, die mit Vergussmasse übergossen sind.

## Claims

1. Detector, in particular metal detector,
- having an elongated narrow housing (2),
- having at least one transmit coil (13) and at least one receive coil (12),
- wherein the at least one transmit coil (13) and the at least one receive coil (12) are arranged decoupled in relation to each other in the housing (2), and
- wherein the coil axis of a coil is arranged in the longitudinal direction of the housing (2) and the coil axis of another coil is arranged approximately perpendicular to the longitudinal direction of the housing (2),
**characterised in that**
- the coil (12) orientated with its coil axis in the longitudinal direction can be placed in the housing (2) at varying distances from the coil (13) arranged approximately perpendicular to the longitudinal direction.

2. Detector according to claim 1,
**characterised in that**
the coil (12) arranged with the coil axis in the longitudinal direction is longer than the coil (13) arranged with the coil axis approximately perpendicular to the longitudinal axis.

3. Detector according to claim 1 or 2,
**characterised in that**
the coils (12, 13) have a cylindrical form and a ferrite core.

4. Detector according to one of the claims 1 to 3,
**characterised in that**
the coils (12, 13) have an electrostatic shielding, in particular by means of carbon fibre plastic tubes.

5. Detector according to claim 4,
**characterised in that**
the shielding is cast with coils (12, 13) and further electronics with a casting compound in the housing (2), and
electrically and / or magnetically neutral means are attached to the casting compound, which comprises in particular epoxy resin, for weight reduction.

6. Detector according to one of the claims 1 to 5,
**characterised in that**
a connecting device (6) for a connecting cable is provided on the upper side of the housing (2), said connecting cable comprising a sealed cable gland (30).

7. Detector according to one of the claims 1 to 6,
**characterised in that**
a holder (7) for a carrying rod (3) of the detector is provided approximately in the middle on the upper side of the housing (2),
an end piece (4) of the carrying rod (3) engages in a jointed manner on the holder (7),
and
the end piece (4) and the holder (7) form a protective means for the connecting device (6) with feed.

8. Detector according to one of the claims 1 to 7,
**characterised in that**
the housing (2) has roughly the form of a narrow, elongated box,
the length of the housing (2) is a multiple of the width, in particular being greater than four times the width, and
the end faces are designed so to be rounded, in particular in the form of part of a circle, or running to a tip or blunt.

9. Detector according to one of the claims 1 to 8,
**characterised in that**
the housing (2) is formed in one part,
reinforcing ribs (10, 14, 15) are provided on the inner side of the housing.

10. Detector according to one of the claims 1 to 9,
**characterised in that**
the housing (2) is formed with two walls at least on the longitudinal sides and the space between the inner walls (20) is cast.

11. Detector according to one of the claims 1 to 10,
**characterised in that**
the upper side of the housing (2) is closed with the exception of the connecting device (6), and the lower side is formed open, and
elongated reinforcing ribs (5) are provided on the upper side.

12. Detector according to one of the claims 5 to 11,
**characterised in that**
the casting compound closes the detector housing (2) on the bottom side flush with the surfaces.

13. Detector according to one of the claims 5 to 12,
**characterised in that**
the hollow spaces around the coils (12, 13) incorporated on the bottom side into the detector housing (2) and the electronics are filled with foam inlay parts which are cast over with casting compound.

## Revendications

1. Détecteur, en particulier détecteur de métaux,
- avec un boîtier (2) de forme étroite et allongée,
- avec au moins une bobine émettrice (13) et au moins une bobine réceptrice (12),
- dans lequel la bobine émettrice (12) au nombre d'au moins un et la bobine réceptrice (12) au nombre d'au moins un sont disposées dans le boîtier (2) de manière découplée l'une de l'autre, et
- dans lequel l'axe de bobine d'une bobine est disposé dans la direction longitudinale du boîtier (2) et l'axe de bobine d'une autre bobine sensiblement perpendiculairement à la direction longitudinale du boîtier (2),
**caractérisé en ce que**
- la bobine (12) orientée avec son axe de bobine dans la direction longitudinale peut être placée dans le boîtier (2) à différentes distances de la bobine (13) placée approximativement perpendiculairement à la direction longitudinale.

2. Détecteur selon la revendication 1, **caractérisé en ce que** la bobine (12) disposée avec l'axe de bobine dans la direction longitudinale est plus longue que la bobine (13) disposée avec l'axe de bobine approximativement perpendiculairement à la direction longitudinale.

3. Détecteur selon la revendication 1 ou 2, **caractérisé en ce que** les bobines (12, 13) présentent une forme cylindrique et un noyau en ferrite.

4. Détecteur selon l'une des revendications 1 à 3, **caractérisé en ce que** les bobines (12, 13) présentent un blindage électrostatique, en particulier au moyen de tubes de matière plastique et fibres de carbone.

5. Détecteur selon la revendication 4, **caractérisé en ce que** le blindage est enrobé avec des bobines (12, 13) et d'autres composants électroniques au moyen d'une masse d'enrobage dans le boîtier (2), et
**en ce qu'**à la masse d'enrobage, qui comprend en particulier de la résine époxy, sont ajoutés des moyens électriquement et/ou magnétiquement neutres pour une réduction de poids.

6. Détecteur selon l'une des revendications 1 à 5, **caractérisé en ce que** sur la face supérieure du boîtier (2) est prévu un dispositif de raccordement (6) pour un câble de liaison, lequel comprend un presse-étoupe étanche (30).

7. Détecteur selon l'une des revendications 1 à 6, **caractérisé en ce que** sur la face supérieure du boîtier (2) est prévue approximativement au centre une fixation (7) pour une barre de support (3) du détecteur,
**en ce qu'**une pièce d'extrémité (4) de la barre de support (3) vient en prise de manière articulée sur la fixation (7), et
**en ce que** la pièce d'extrémité (4) et la fixation (7) forment un dispositif protecteur pour le dispositif de raccordement (6) avec introduction.

8. Détecteur selon l'une des revendications 1 à 7, **caractérisé en ce que** le boîtier (2) présente approximativement la forme d'une boîte étroite et allongée,
**en ce que** la longueur du boîtier (2) est nettement supérieure à la largeur, en particulier supérieure à quatre fois la largeur, et
**en ce que** les faces frontales sont arrondies, en particulier en forme d'arc de cercle, ou effilées en pointe ou émoussées.

9. Détecteur selon l'une des revendications 1 à 8, **caractérisé en ce que** le boîtier (2) est réalisé d'un seul tenant,
**en ce que** des nervures de rigidité (10, 14, 15) sont prévues sur la face intérieure du boîtier.

10. Détecteur selon l'une des revendications 1 à 9, **caractérisé en ce que** le boîtier (2) est réalisé à double paroi au moins sur les côtés longitudinaux, et **en ce que** l'espace entre les parois intérieures (20) est rempli par coulage.

11. Détecteur selon l'une des revendications 1 à 10, **caractérisé en ce que** la face supérieure du boîtier (2) est fermée à l'exception du dispositif de raccordement (6) et la face inférieure est ouverte, et
**en ce que** sur la face supérieure sont prévues des nervures de rigidité allongées (5).

12. Détecteur selon l'une des revendications 5 à 11, **caractérisé en ce que** la masse coulée ferme le boîtier de détecteur (2) en affleurement côté fond.

13. Détecteur selon l'une des revendications 5 à 12, **caractérisé en ce que** les cavités autour des bobines (12, 13) insérées côté fond dans le boîtier de détecteur (2) et des composants électroniques sont remplies d'inserts en mousse qui sont recouverts de masse coulée.
